# EUROPEAN PATENT APPLICATION

(11) **EP 4 358 067 A1**
(43) Date of publication of application: **24.04.2024**
(21) Application number: 23199438.5
(22) Date of filing: 25.09.2023
(51) Int. Cl.: G08G 5/00

(54) **METHODS AND SYSTEMS FOR AIRCRAFT PROCEDURE VERIFICATION USING A VIRTUAL CURSOR**

(30) Priority: 19.10.2022 IN 202211059779; 14.12.2022 US 202218065844
(71) Applicant: Honeywell International Inc., Charlotte, NC 28202 (US)
(72) Inventor: SAMUTHIRAPANDIAN, Subash, Charlotte, 28202 (US); VISWANATHA, Kaushik, Charlotte, 28202 (US); WYATT, Ivan Sandy, Charlotte, 28202 (US)
(74) Representative: Lucas, Peter Lawrence

(57) **Abstract**

Methods and systems are provided for assisting operation of a vehicle such as an aircraft using a virtual cursor. One method involves identifying a displayed location of an active cursor overlying a first navigational map graphical user interface (GUI) display, determining a geographic reference point on the first navigational map GUI corresponding to the displayed location of the active cursor, determining a location for a virtual cursor to be displayed on a second navigational map GUI display corresponding to the geographic reference point on the first navigational map GUI display and concurrently displaying the virtual cursor at the determined location overlying the second navigational map.

## Description

### CROSS REFERENCE TO RELATED APPLICATION

This application claims priority to Indian Provisional Patent Application No. 202211059779, filed October 19, 2022, the entire content of which is incorporated by reference herein.

### TECHNICAL FIELD

The subject matter described herein relates generally to vehicle systems, and more particularly, embodiments of the subject matter relate to aircraft systems capable of presenting virtual cursors on inactive displays.

### BACKGROUND

Modern electronic displays for vehicles (such as aircraft, automobiles, marine vessels, or trains) display a considerable amount of information, such as vehicle position, navigation and terrain information. In the case of an aircraft, many modern flight deck displays (or cockpit displays) are utilized to provide a number of different displays from which the pilot can obtain information or perform functions related to, for example, navigation, flight planning, guidance and navigation, and performance management.

Standard operating procedures (SOPs) or crew resource management (CRM) protocols often require that a pilot review (or brief) an aircraft procedure (e.g., Instrument Approach Procedure (IAP) charts, Standard Terminal Arrival (STAR) charts or Terminal Arrival Area (TAA) charts, Standard Instrument Departure (SID) routes, Departure Procedures (DP), and the like) before attempting to execute that procedure. However, the size of the electronic display inside an aircraft cockpit is often limited due to the number of instruments and human-machine interface elements inside the cockpit (e.g., joysticks, knobs, buttons, and the like) along with the need for the pilot to have an unobstructed view outside the aircraft. When the electronic display does not include all of the procedure information to be briefed, a pilot may have to pan or otherwise navigate within the display to center or focus the displayed area on the desired element or area in order to review the procedure information of interest, or in some instances, zoom in or otherwise change the range or scale of the displayed area to achieve sufficient spatial differentiation among elements to enable briefing of the desired element. Manipulating the display in such a manner to arrive at the desired selection may be time consuming, inefficient, error prone, and distracting. Additionally, in order to relate the procedure information back to the flight plan, a pilot or crew member may still be relegated to mentally synthesizing information from different displays, which distracts the pilot from any other visual tasks that the pilot may need to perform (e.g., a concurrent visual monitoring requirement) and requires that the pilot locate the appropriate procedure information on the other electronic display(s). Accordingly, it is desirable to reduce the workload on the pilot to synthesize information from different displays and improve situational awareness. Other desirable features and characteristics will become apparent from the subsequent detailed description and the appended claims, taken in conjunction with the accompanying drawings and this background.

### BRIEF SUMMARY

Methods and systems are provided for assisting operation of a vehicle, such as an aircraft, by concurrently displaying a virtual cursor on a graphical user interface (GUI) display while a vehicle operator or other user is interacting with another GUI display using another cursor. One method involves identifying a displayed location of a cursor overlying a first navigational map on a GUI display, determining a geographic reference point on the first navigational map corresponding to the displayed location of the cursor, determining a location for a virtual cursor to be displayed on a second navigational map corresponding to the geographic reference point on the first navigational map and concurrently displaying the virtual cursor at the determined location overlying the second navigational map.

An apparatus for a computer-readable medium is provided that has computer-executable instructions stored thereon that, when executed by a processing system, cause the processing system to identify a displayed location of an active cursor overlying a first GUI display, determine a geographic reference point on the first GUI display corresponding to the displayed location of the active cursor, determine a second location for displaying a virtual cursor on a second GUI display corresponding to the geographic reference point on the first GUI display, wherein the second GUI display is different from the first GUI display, and concurrently display the virtual cursor at the second location overlying the second GUI display while the active cursor overlying the first GUI display is depicted at the displayed location on the first GUI display.

In another embodiment, a system is provided that includes a user input device to receive user input, a first application to provide a first navigational map GUI display including a graphical representation of an active cursor associated with the user input, a second application to provide a second navigational map GUI display, and a cursor mapping service coupled to the first application and the second application to identify a pixel coordinate location of the active cursor on the first navigational map GUI display, determine a geographic reference point on the first navigational map GUI display corresponding to the pixel coordinate location, determine a second pixel coordinate location on the second navigational map GUI display corresponding to the geographic reference point on the first navigational map GUI display, and concurrently display a virtual cursor at the second pixel coordinate location on the second navigational map GUI display.

### BRIEF DESCRIPTION OF THE DRAWINGS

Embodiments of the subject matter will hereinafter be described in conjunction with the following drawing figures, wherein like numerals denote like elements, and:
FIG. 1 is a block diagram of a system for an aircraft in an exemplary embodiment;
FIG. 2 is a block diagram of a virtual cursor display system suitable for use with the aircraft system of FIG. 1 in accordance with one or more embodiments;
FIG. 3 is a flow diagram of an exemplary cursor mapping process suitable for implementation by the virtual cursor display system of FIG. 2 in the aircraft system of FIG. 1 in accordance with one or more embodiments; and
FIGS. 4-7 depicts exemplary graphical user interface (GUI) displays suitable for presentation by the virtual cursor display system of FIG. 2 in the aircraft system of FIG. 1 in connection with the cursor mapping process of FIG. 3 in accordance with one or more embodiments.

### DETAILED DESCRIPTION

Embodiments of the subject matter described herein generally relate to systems and methods for assisting operation of a vehicle en route to a destination along a planned route of travel by facilitating a vehicle operator correlating displayed information across different displays using virtual cursors. While the subject matter described herein could be utilized in various applications or in the context of various different types of vehicles, both manned and unmanned, for purposes of explanation, the subject matter is primarily described herein in the context of an aircraft. However, the subject matter described herein is not necessarily limited to aircraft or avionic environments, and in alternative embodiments, may be implemented in an equivalent manner for ground operations, marine operations, or otherwise in the context of other types of vehicles with respect to a planned route of travel.

For example, modern manned aircraft cockpits contain various display and control applications that generate corresponding graphical user interface (GUI) displays, such as, for example, an interactive navigational (INAV) lateral map GUI display, a primary flight display (PFD) GUI display, a waypoint list (WPL) GUI display, a procedure chart GUI display, and the like. Some navigational GUI displays, such as the INAV lateral map GUI display and the WPL GUI display depict the planned routing the aircraft is expected to fly from departure to destination based on the flight plan data maintained at a flight management system (FMS) onboard the aircraft, where the INAV lateral map GUI display graphically illustrates the routing and the WPL GUI display depicts the route fixes, constraints, and other flight plan details in a textual form. The procedure chart GUI display graphically illustrates and describes the specific procedure information and instructions (e.g., minimum descent altitudes, minimum runway visual range, final course or heading, relevant radio frequencies, missed approach procedures) to be followed or otherwise utilized by a pilot for executing a particular aircraft procedure. These published aeronautical charts, such as, for example, Instrument Approach Procedure (IAP) charts, Standard Terminal Arrival (STAR) charts or Terminal Arrival Area (TAA) charts, Standard Instrument Departure (SID) routes, Departure Procedures (DP), terminal procedures, approach plates, and the like, depict and describe the procedures for operating aircraft at or in the vicinity of various airports, runways, or other landing and/or departure locations, and are typically provided by a governmental or regulatory organization, such as, for example, the Federal Aviation Administration in the United States.

In practice, a pilot or flight crew may receive specific routing instructions before flight and intermittently throughout the flight, which may include specific published procedures assigned by air traffic control (ATC) that the aircraft is expected to follow. The pilot or other crew member is expected to ensure that the FMS flight plan presented on the INAV GUI display, the WPL GUI display, and other flight plan-related GUI displays comply with the published procedures assigned for the aircraft. The FMS flight planning application may fetch or otherwise retrieve information for the waypoints associated with the assigned procedure from a navigation database and insert them into the flight plan. Before flying a procedure routing using the FMS flight plan, the pilot, co-pilot or other crew member verifies the FMS flight plan containing the assigned procedure that is currently displayed on the INAV, WPL and other flight plan-related GUI displays against the procedure chart for the assigned procedure that is displayed by the charts application on the procedure chart GUI display. Otherwise, any error in the FMS flight plan procedure route could in the aircraft flying the wrong route or deviating from the published procedure, particularly in terminal areas, which could create additional workload for the pilot, ATC, and potentially surrounding air traffic. However, there can be significant workload for a pilot or other crew member attempting to correlated and verify procedure waypoints displayed as part of a flight plan-related navigational GUI display against the same displayed on a procedure chart GUI display, for example, because different navigational map GUI displays may have different zoom levels or scales, different geographical center locations, and/or the like.

Exemplary embodiments described herein facilitate a pilot or other crew member correlating waypoints or other geographic reference points across different GUI displays by concurrently displaying a virtual cursor on a GUI display that is not currently being interacted with (alternatively referred to herein as an inactive GUI display) at a displayed geographic location that corresponds to the displayed geographic location of a cursor associated with user input with respect to another GUI display that the pilot or other user is currently interacting with (alternatively referred to herein as an active GUI display). In this regard, the pixel coordinate location of an active cursor overlying a navigational map that the pilot is currently interacting with, such as an INAV lateral map GUI display, is mapped to a corresponding pixel location for rendering a virtual cursor overlying another navigational map that the pilot is not currently interacting with, such as procedure chart GUI, such that the displayed location of the virtual cursor with respect to the geographic region depicted on the inactive navigational map corresponds to the same geographic location associated with the displayed location of the active cursor with respect to the geographic region depicted on the active navigational map.

For example, to provide a virtual cursor on a procedure chart GUI display while a pilot or other user is interacting with an INAV lateral map GUI display, the pixel coordinate location of the active cursor overlying the INAV lateral map GUI display is identified and mapped to a corresponding geographic reference point. In some implementations, the geographic reference point may be identified as the waypoint or other feature or point of interest rendered on the INAV lateral map GUI display at an associated pixel coordinate location that is closest to the current pixel coordinate location of the active cursor, that is, the cursor location may be fuzzy matched to a particular waypoint or other geographic reference point based on proximity. In other implementations, the geographic reference point may be identified by determining a geographic location associated with the active cursor based on a relationship between the cursor pixel coordinate location and the pixel coordinate location associated with the geometric center location of the INAV lateral map GUI display, for example, by using a scale or range associated with the geographic region currently depicted on the INAV lateral map GUI display to map the relative pixel coordinate distance and orientation of the active cursor with respect to the center of the INAV lateral map GUI display to a corresponding geographic location relative to the geographic coordinate location associated with the center of the INAV lateral map GUI display.

Once the active cursor location is mapped to a corresponding geographic reference point, the geographic reference point is then mapped to a corresponding pixel coordinate location on the procedure chart GUI display based on the geometric center location of the procedure chart GUI display and a scale or range associated with the geographic region currently depicted on the procedure chart GUI display to map the geographic coordinate location associated with the geographic reference point to a corresponding pixel location where that geographic coordinate location is depicted on the procedure chart GUI display. A virtual cursor is then rendered or otherwise displayed overlying the procedure chart GUI display at the mapped pixel coordinate location that corresponds to the current geographic location or geographic reference point underlying the active cursor on the INAV lateral map GUI display. Thus, when the pilot or other user moves the active cursor on the INAV lateral map GUI display to hover on or otherwise overlie a particular waypoint or geographic location of interest, a corresponding virtual cursor is rendered on or overlying the procedure chart GUI display at a pixel coordinate location on the procedure chart GUI display that corresponds to the particular waypoint or geographic location of interest that the pilot or other user is currently hovering the active cursor over on the INAV lateral map GUI display. As the pilot or other user moves the active cursor on the INAV lateral map GUI display, the displayed location of the virtual cursor on the procedure chart GUI display dynamically updates in real-time such that the geographic location underlying the virtual cursor on the procedure chart GUI display corresponds to the geographic location underlying the active cursor on the INAV lateral map GUI display. In this manner, the geographic locations where different cursors are displayed on the different GUI displays are synchronized, such that movement of the displayed location of the active cursor to a different geographic location on a navigational map GUI display results in corresponding movement of the displayed location of the virtual cursor to reflect or otherwise indicate the same geographic location where the active cursor is currently displayed.

In a similar manner, to provide a virtual cursor on an INAV lateral map GUI display while a pilot or other user is interacting with a procedure chart GUI display, the pixel coordinate location of the active cursor overlying the procedure chart GUI display is similarly identified and mapped to a corresponding geographic reference point, for example, by mapping the pixel coordinate location of the active cursor overlying the procedure chart GUI display relative to the geometric center location of the procedure chart GUI display to a corresponding geographic coordinate location based on the geographic coordinate location associated with the geometric center location of the procedure chart GUI display and a scale or range associated with the geographic region currently depicted on the procedure chart GUI display. Once the pixel coordinate location of the active cursor overlying the procedure chart GUI display is mapped to a particular geographic coordinate location, a corresponding virtual cursor is rendered or otherwise provided on the INAV lateral map GUI display at the pixel coordinate location on the INAV lateral map GUI display that corresponds to that geographic coordinate location using the geographic coordinate location associated with the geometric center location of INAV lateral map GUI display and the range or scale associated with the INAV lateral map GUI display. Thus, when the pilot or other user moves the active cursor on the procedure chart GUI display to hover on or otherwise overlie a particular waypoint or geographic location of interest, a corresponding virtual cursor is rendered on or overlying the INAV lateral map GUI display at a pixel coordinate location on the INAV lateral map GUI display that corresponds to the particular waypoint or geographic location of interest that the pilot or other user is currently hovering the active cursor over on the procedure chart GUI display. It should be noted that the subject matter described herein is not limited to virtual cursor mapping between an INAV lateral map GUI display and a procedure chart GUI display and in practice may be implemented in an equivalent manner for any number of different types and combinations of navigational GUI displays, and the subject matter described herein is not intended to be limited to any particular type or content of the underlying GUI displays.

By virtue of concurrently depicting a virtual cursor on an inactive navigational GUI display while the pilot, co-pilot or other user interacts with an active navigational GUI display using a cursor, the pilot, co-pilot or other user can quickly and visually understand where and how the waypoints, navigational reference points or other information depicted on the active navigational GUI display relates to the waypoints, navigational reference points or other information depicted on the inactive navigational GUI display, and vice versa. For example, when a pilot interacts with a lateral map or other navigational map display, a waypoint list window, or another onboard display to review one or more waypoints that define the lateral route of the flight plan, the virtual cursor is concurrently depicted on the procedure chart GUI display to allow the pilot to concurrently view the same waypoint or other geographic reference point of interest on the procedure chart GUI display to quickly verify that the flight plan data maintained by or at the FMS matches or otherwise corresponds to the procedure information associated with the assigned procedure for execution.

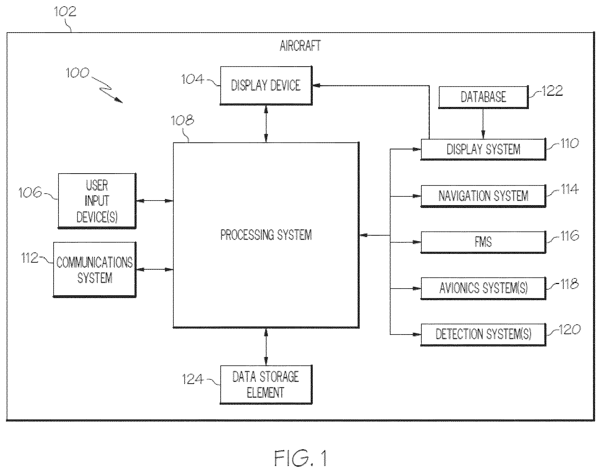

FIG. 1 depicts an exemplary embodiment of a system 100 suitable for implementing the subject matter described herein, which may be located onboard a vehicle, such as an aircraft 102. The system 100 includes, without limitation, a display device 104, a user input device 106, a processing system 108, a display system 110, a communications system 112, a navigation system 114, a flight management system (FMS) 116, one or more avionics systems 118, one or more detection systems 120, and one or more data storage elements 122, 124 cooperatively configured to support operation of the system 100, as described in greater detail below.

In exemplary embodiments, the display device 104 is realized as an electronic display capable of graphically displaying flight information or other data associated with operation of the aircraft 102 under control of the display system 110 and/or processing system 108. In this regard, the display device 104 is coupled to the display system 110 and the processing system 108, and the processing system 108 and the display system 110 are cooperatively configured to display, render, or otherwise convey one or more graphical representations or images associated with operation of the aircraft 102 on the display device 104, as described in greater detail below.

The user input device 106 is coupled to the processing system 108, and the user input device 106 and the processing system 108 are cooperatively configured to allow a user (e.g., a pilot, co-pilot, or crew member) to interact with the display device 104 and/or other elements of the aircraft system 100. Depending on the embodiment, the user input device 106 may be realized as a keypad, touchpad, keyboard, mouse, touch panel (or touchscreen), joystick, knob, line select key or another suitable device adapted to receive input from a user. In some embodiments, the user input device 106 is realized as an audio input device, such as a microphone, audio transducer, audio sensor, or the like, that is adapted to allow a user to provide audio input to the aircraft system 100 in a "hands free" manner without requiring the user to move his or her hands, eyes and/or head to interact with the aircraft system 100.

The processing system 108 generally represents the hardware, circuitry, processing logic, and/or other components configured to facilitate communications and/or interaction between the elements of the aircraft system 100 and perform additional processes, tasks and/or functions to support operation of the aircraft system 100, as described in greater detail below. Depending on the embodiment, the processing system 108 may be implemented or realized with a general purpose processor, a controller, a microprocessor, a microcontroller, a content addressable memory, a digital signal processor, an application specific integrated circuit, a field programmable gate array, any suitable programmable logic device, discrete gate or transistor logic, processing core, discrete hardware components, or any combination thereof, designed to perform the functions described herein. In practice, the processing system 108 includes processing logic that may be configured to carry out the functions, techniques, and processing tasks associated with the operation of the aircraft system 100 described in greater detail below. Furthermore, the steps of a method or algorithm described in connection with the embodiments disclosed herein may be embodied directly in hardware, in firmware, in a software module executed by the processing system 108, or in any practical combination thereof. In accordance with one or more embodiments, the processing system 108 includes or otherwise accesses a data storage element, such as a memory (e.g., RAM memory, ROM memory, flash memory, registers, a hard disk, or the like) or another suitable non-transitory short or long term storage media capable of storing computer-executable programming instructions or other data for execution that, when read and executed by the processing system 108, cause the processing system 108 to execute and perform one or more of the processes, tasks, operations, and/or functions described herein.

The display system 110 generally represents the hardware, firmware, processing logic and/or other components configured to control the display and/or rendering of one or more displays pertaining to operation of the aircraft 102 and/or systems 112, 114, 116, 118, 120 on the display device 104 (e.g., synthetic vision displays, navigational maps, and the like). In this regard, the display system 110 may access or include one or more databases 122 suitably configured to support operations of the display system 110, such as, for example, a terrain database, an obstacle database, a navigational database, a geopolitical database, a terminal airspace database, a special use airspace database, or other information for rendering and/or displaying navigational maps and/or other content on the display device 104. In this regard, in addition to including a graphical representation of terrain, a navigational map displayed on the display device 104 may include graphical representations of navigational reference points (e.g., waypoints, navigational aids, distance measuring equipment (DMEs), very high frequency omnidirectional radio ranges (VORs), and the like), designated special use airspaces, obstacles, and the like overlying the terrain on the map.

In the illustrated embodiment, the aircraft system 100 includes a data storage element 124, which may contain aircraft procedure information (or instrument procedure information) for a plurality of airports and maintain associations between the aircraft procedure information and the corresponding airports. Depending on the embodiment, the data storage element 124 may be physically realized using RAM memory, ROM memory, flash memory, registers, a hard disk, or another suitable data storage medium known in the art or any suitable combination thereof. As used herein, aircraft procedure information should be understood as a set of operating parameters, constraints, or instructions associated with a particular aircraft action (e.g., approach, departure, arrival, climbing, and the like) that may be undertaken by the aircraft 120 at or in the vicinity of a particular airport. An airport should be understood as referring to any sort of location suitable for landing (or arrival) and/or takeoff (or departure) of an aircraft, such as, for example, airports, runways, landing strips, and other suitable landing and/or departure locations, and an aircraft action should be understood as referring to an approach (or landing), an arrival, a departure (or takeoff), an ascent, taxiing, or another aircraft action having associated aircraft procedure information. An airport may have one or more predefined aircraft procedures associated therewith, wherein the aircraft procedure information for each aircraft procedure at each respective airport are maintained by the data storage element 124 in association with one another.

Depending on the embodiment, the aircraft procedure information may be provided by or otherwise obtained from a governmental or regulatory organization, such as, for example, the Federal Aviation Administration in the United States. In an exemplary embodiment, the aircraft procedure information comprises instrument procedure information, such as instrument approach procedures, standard terminal arrival routes, instrument departure procedures, standard instrument departure routes, obstacle departure procedures, or the like, traditionally displayed on a published charts, such as Instrument Approach Procedure (IAP) charts, Standard Terminal Arrival (STAR) charts or Terminal Arrival Area (TAA) charts, Standard Instrument Departure (SID) routes, Departure Procedures (DP), terminal procedures, approach plates, and the like. In exemplary embodiments, the data storage element 124 maintains associations between prescribed operating parameters, constraints, and the like and respective navigational reference points (e.g., waypoints, positional fixes, radio ground stations (VORs, VORTACs, TACANs, and the like), distance measuring equipment, non-directional beacons, or the like) defining the aircraft procedure, such as, for example, altitude minima or maxima, minimum and/or maximum speed constraints, RTA constraints, and the like. In this regard, although the subject matter may be described in the context of a particular procedure for purpose of explanation, the subject matter is not intended to be limited to use with any particular type of aircraft procedure and may be implemented for other aircraft procedures in an equivalent manner.

Still referring to FIG. 1, in one or more exemplary embodiments, the processing system 108 is coupled to the navigation system 114, which is configured to provide real-time navigational data and/or information regarding operation of the aircraft 102. The navigation system 114 may be realized as a global positioning system (GPS), inertial reference system (IRS), or a radio-based navigation system (e.g., VHF omni-directional radio range (VOR) or long range aid to navigation (LORAN)), and may include one or more navigational radios or other sensors suitably configured to support operation of the navigation system 114, as will be appreciated in the art. The navigation system 114 is capable of obtaining and/or determining the instantaneous position of the aircraft 102, that is, the current (or instantaneous) location of the aircraft 102 (e.g., the current latitude and longitude) and the current (or instantaneous) altitude (or above ground level) for the aircraft 102. The navigation system 114 is also capable of obtaining or otherwise determining the heading of the aircraft 102 (i.e., the direction the aircraft is traveling in relative to some reference). Additionally, in one or more exemplary embodiments, the navigation system 114 includes inertial reference sensors capable of obtaining or otherwise determining the attitude or orientation (e.g., the pitch, roll, and yaw, heading) of the aircraft 102 relative to earth.

In one or more exemplary embodiments, the processing system 108 is also coupled to the FMS 116, which is coupled to the navigation system 114, the communications system 112, and one or more additional avionics systems 118 to support navigation, flight planning, and other aircraft control functions in a conventional manner, as well as to provide real-time data and/or information regarding the operational status of the aircraft 102 to the processing system 108. It should be noted that although FIG. 1 depicts a single avionics system 118, in practice, the aircraft system 100 and/or aircraft 102 will likely include numerous avionics systems for obtaining and/or providing real-time flight-related information that may be displayed on the display device 104 or otherwise provided to a user (e.g., a pilot, a co-pilot, or crew member). For example, practical embodiments of the aircraft system 100 and/or aircraft 102 will likely include one or more of the following avionics systems suitably configured to support operation of the aircraft 102: a weather system, an air traffic management system, a radar system, a traffic avoidance system, an autopilot system, an autothrust system, a flight control system, hydraulics systems, pneumatics systems, environmental systems, electrical systems, engine systems, trim systems, lighting systems, crew alerting systems, electronic checklist systems, an electronic flight bag and/or another suitable avionics system.

In the illustrated embodiment, the onboard detection system(s) 120 generally represents the component(s) of the aircraft 102 that are coupled to the processing system 108 and/or the display system 110 to generate or otherwise provide information indicative of various objects or regions of interest within the vicinity of the aircraft 102 that are sensed, detected, or otherwise identified by a respective onboard detection system 120. For example, an onboard detection system 120 may be realized as a weather radar system or other weather sensing system that measures, senses, or otherwise detects meteorological conditions in the vicinity of the aircraft 102 and provides corresponding radar data (e.g., radar imaging data, range setting data, angle setting data, and/or the like) to one or more of the other onboard systems 108, 110, 114, 116, 118 for further processing and/or handling. For example, the processing system 108 and/or the display system 110 may generate or otherwise provide graphical representations of the meteorological conditions identified by the onboard detection system 120 on the display device 104 (e.g., on or overlying a lateral navigational map display). In another embodiment, an onboard detection system 120 may be realized as a collision avoidance system that measures, senses, or otherwise detects air traffic, obstacles, terrain and/or the like in the vicinity of the aircraft 102 and provides corresponding detection data to one or more of the other onboard systems 108, 110, 114, 116, 118.

In the illustrated embodiment, the processing system 108 is also coupled to the communications system 112, which is configured to support communications to and/or from the aircraft 102 via a communications network. For example, the communications system 112 may also include a data link system or another suitable radio communication system that supports communications between the aircraft 102 and one or more external monitoring systems, air traffic control, and/or another command center or ground location. In this regard, the communications system 112 may allow the aircraft 102 to receive information that would otherwise be unavailable to the pilot and/or co-pilot using the onboard systems 114, 116, 118, 120. For example, the communications system 112 may receive meteorological information from an external weather monitoring system, such as a Doppler radar monitoring system, a convective forecast system (e.g., a collaborative convective forecast product (CCFP) or national convective weather forecast (NCWF) system), an infrared satellite system, or the like, that is capable of providing information pertaining to the type, location and/or severity of precipitation, icing, turbulence, convection, cloud cover, wind shear, wind speed, lightning, freezing levels, cyclonic activity, thunderstorms, or the like along with other weather advisories, warnings, and/or watches. The meteorological information provided by an external weather monitoring system may also include forecast meteorological data that is generated based on historical trends and/or other weather observations, and may include forecasted meteorological data for geographical areas that are beyond the range of any weather detection systems 120 onboard the aircraft 102. In other embodiments, the processing system 108 may store or otherwise maintain historical meteorological data previously received from an external weather monitoring system, with the processing system 108 calculating or otherwise determining forecast meteorological for geographic areas of interest to the aircraft 102 based on the stored meteorological data and the current (or most recently received) meteorological data from the external weather monitoring system. In this regard, the meteorological information from the external weather monitoring system may be operationally used to obtain a "big picture" strategic view of the current weather phenomena and trends in its changes in intensity and/or movement with respect to prospective operation of the aircraft 102.

It should be understood that FIG. 1 is a simplified representation of the aircraft system 100 for purposes of explanation and ease of description, and FIG. 1 is not intended to limit the application or scope of the subject matter described herein in any way. It should be appreciated that although FIG. 1 shows the display device 104, the user input device 106, and the processing system 108 as being located onboard the aircraft 102 (e.g., in the cockpit), in practice, one or more of the display device 104, the user input device 106, and/or the processing system 108 may be located outside the aircraft 102 (e.g., on the ground as part of an air traffic control center or another command center) and communicatively coupled to the remaining elements of the aircraft system 100 (e.g., via a data link and/or communications system 112). In this regard, in some embodiments, the display device 104, the user input device 106, and/or the processing system 108 may be implemented as an electronic flight bag (EFB) that is separate from the aircraft 102 but capable of being communicatively coupled to the other elements of the aircraft system 100 when onboard the aircraft 102. Similarly, in some embodiments, the data storage element 124 may be located outside the aircraft 102 and communicatively coupled to the processing system 108 via a data link and/or communications system 112. Furthermore, practical embodiments of the aircraft system 100 and/or aircraft 102 will include numerous other devices and components for providing additional functions and features, as will be appreciated in the art. In this regard, it will be appreciated that although FIG. 1 shows a single display device 104, in practice, additional display devices may be present onboard the aircraft 102. Additionally, it should be noted that in other embodiments, features and/or functionality of processing system 108 described herein can be implemented by or otherwise integrated with the features and/or functionality provided by the display system 110 or the FMS 116, or vice versa. In other words, some embodiments may integrate the processing system 108 with the display system 110 or the FMS 116; that is, the processing system 108 may be a component of the display system 110 and/or the FMS 116.

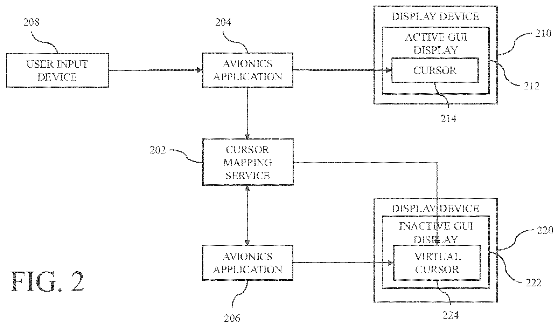

FIG. 2 depicts an exemplary virtual cursor display system 200 suitable for implementation in connection with a vehicle system, such as the aircraft system 100 associated with the aircraft 102. The virtual cursor display system 200 includes a cursor mapping service 202 that communicates or otherwise interacts with different applications 204, 206 responsible for rendering, generating or otherwise presenting corresponding GUI displays 212, 222 on a respective display device 210, 220 (e.g., instances of display device 104). As described in greater detail below, the cursor mapping service 202 monitors the displayed location of a graphic, GUI element or other graphical representation of a cursor 214 associated with a user input device 208 on the GUI display 212 associated with the application 204 that the user is currently interacting with via the user input device 208 (e.g., user input device 106) and generates a corresponding graphic, GUI element or other graphical representation for a virtual cursor 224 on the GUI display 222 associated with the application 206 that the user is not currently interacting with. In this regard, for purposes of explanation, the application 204 and the corresponding GUI display 212 that the user is directly interacting with via the user input device 208 may alternatively be referred to herein as the active application or the active GUI display, while the application 206 and the corresponding GUI display 222 that the user is not directly interacting with may alternatively be referred to herein as the inactive application or the inactive GUI display.

In exemplary embodiments, when the virtual cursor display system 200 is implemented onboard an aircraft 102, the different applications 204, 206 generally represent different avionics applications that may be executed by, on or at one or more avionics systems onboard the aircraft 102, such as, for example, the FMS 116, the display system 110, the navigation system 114, or another avionics system 112, 118, 120. For example, the active avionics application 204 may be realized as a INAV lateral map application that is executed by the FMS 116 or the display system 110 to generate a INAV lateral map GUI display 212 based on flight plan data maintained at the FMS 116 on a display device 210 associated with the FMS 116, while the inactive avionics application 206 may be realized as a procedure chart display application that is executed by the display system 110, the processing system 108 or another avionics system 118 to generate a procedure chart GUI display 222 based on procedure information maintained in a procedure database (e.g., data storage element 124). As will be understood, the avionics applications 204, 206 generally represent software or one or more computer programs realized using code or other computer-executable programming instructions stored on any sort of data storage or other non-transitory short or long term storage media that, when read and executed by a processor associated with a respective avionics system 110, 112, 114, 116, 118, 120, cause the processor generate or otherwise facilitate the respective avionics application 204, 206 to generate a corresponding GUI display 212, 222 and support or otherwise perform certain tasks, operations, functions, and/or processes associated with the respective avionics application 204, 206.

The cursor mapping service 202 generally represents a computer program, process or other software component embodied by code or other computer-executable programming instructions stored on any sort of data storage or other non-transitory short or long term storage media that, when read and executed by a processor, cause the processor to support a cursor mapping process that generates a virtual cursor 224 at a pixel coordinate location with respect to a navigational map on the inactive GUI display 222 that corresponds to the geographic location associated with the pixel coordinate location of the active cursor 214 overlying the active GUI display 212 and support or otherwise perform related tasks, operations, functions, and/or processes described herein. In one exemplary embodiment, the cursor mapping service 202 is executed or otherwise supported by the processing system 108 that is communicatively coupled to the various avionics systems 110, 112, 114, 116, 118, 120 onboard the aircraft 102 to support mapping the displayed location of an active cursor 214 associated with an active avionics application 204 executed by or on a respective avionics system 110, 112, 114, 116, 118, 120 to a corresponding location for a virtual cursor 224 to be associated with an inactive avionics application 206 executed by or on a different avionics system 110, 112, 114, 116, 118, 120.

It should be noted that although FIG. 2 depicts the avionics applications 204, 206 and the cursor mapping service 202 as being implemented separately, in practice, one or more of the cursor mapping service 202 and the avionics applications 204, 206 may be integrated or otherwise combined and executed by or at the processing system 108 or a common avionics system 110, 112, 114, 116, 118, 120. For example, the cursor mapping service 202 may be integrated, incorporated, or otherwise combined with one of the avionics applications 204, 206 as a plug-in or add-in to existing software for the underlying avionics application 204, 206. Moreover, although FIG. 2 depicts the separate GUI displays 212, 222 being rendered, generated or presented on separate display devices 210, 220, in practice, the GUI displays 212, 222 may be rendered, generated or presented on a common display device (e.g., display device 104) that is shared across the processing system 108 and/or the avionics systems 110, 112, 114, 116, 118, 120. In this regard, the subject matter described herein is not limited to any particular hardware and/or software architecture or combinations thereof.

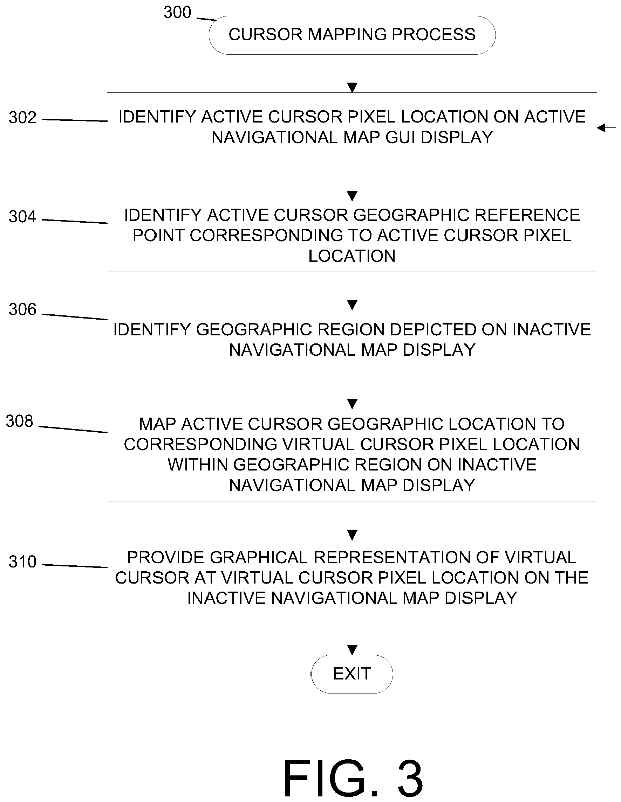

Referring now to FIG. 3, in one or more exemplary embodiments, the cursor mapping service 202 implemented by the processing system 108 in the aircraft system 100 is configured to support a cursor mapping process 300 to display, present, or otherwise provide a graphical representation of a virtual cursor on an inactive GUI display concurrently to user interaction with an active GUI display and perform additional tasks, functions, and operations described below. The various tasks performed in connection with the illustrated process 300 may be implemented using hardware, firmware, software executed by processing circuitry, or any combination thereof. For illustrative purposes, the following description may refer to elements mentioned above in connection with FIGS. 1-2. In practice, portions of the cursor mapping process 300 may be performed by different elements of an aircraft system 100; that said, for purposes of explanation, the cursor mapping process 300 may be described herein primarily in the context of a cursor mapping service 202 implemented or otherwise supported by the processing system 108. It should be appreciated that the cursor mapping process 300 may include any number of additional or alternative tasks, the tasks need not be performed in the illustrated order and/or the tasks may be performed concurrently, and/or the cursor mapping process 300 may be incorporated into a more comprehensive procedure or process having additional functionality not described in detail herein. Moreover, one or more of the tasks shown and described in the context of FIG. 3 could be omitted from a practical embodiment of the cursor mapping process 300 as long as the intended overall functionality remains intact.

Referring to FIG. 3 with continued reference to FIGS. 1-2, in one or more exemplary embodiments, the cursor mapping process 300 is initiated or otherwise performed after the pilot or other user has selected or otherwise manipulated a GUI element to enable or otherwise activate the cursor mapping process 300. For example, one of the GUI displays 212, 222 may include a checkbox or similar GUI element that is manipulable by a pilot or other user to activate, configure or otherwise enable the cursor mapping service 202 to map a cursor location across different GUI displays 212, 222.

When the cursor mapping process 300 is active or otherwise enabled, the cursor mapping process 300 identifies or otherwise determines the current pixel location associated with the active cursor on the active GUI display (task 302), and based on the current pixel location with respect to the underlying content of the GUI display, the cursor mapping process 300 identifies or otherwise determines a geographic reference point corresponding to the current pixel location of the active cursor (task 304). In exemplary embodiments, the cursor mapping service 202 receives or otherwise obtains, from the active avionics application 204, data or other information identifying the current pixel coordinate location for where the active avionics application 204 is currently rendering a graphical representation of the active cursor 214 on the active GUI display 212 on the display device 210 along with data or other information identifying the geographic region presented on the active GUI display 212, and based thereon, the cursor mapping service 202 determines a corresponding geographic location for the active cursor 214, that is, the latitude and longitude coordinates of the depicted geographic region that underlies the active cursor 214 or that the active cursor 214 is otherwise pointing to, indicating or highlighting within the depicted geographic region.

For example, when the avionics application 204 is rendering or otherwise providing an INAV lateral map or other navigational map GUI display 212 on the display device 210, the avionics application 204 may output or otherwise provide, to the cursor mapping service 202, indicia of a reference geographic coordinate location corresponding to the geometric center (or another reference point) of the navigational map GUI display 212, a reference pixel coordinate location on the display device 210 corresponding to the geometric center (or another reference point) of the navigational map GUI display 212, the range, scale, zoom or other indicia of the geographic region depicted on the navigational map GUI display 212 and/or indicia of the display area (or range of pixel coordinate locations) occupied by the geographic region depicted on the active navigational map GUI display 212. As a pilot or other user manipulates the user input device 208, the avionics application 204 dynamically determines a corresponding pixel coordinate location for the active cursor 214 that corresponds to the user input and then renders or otherwise provides a graphical representation of the active cursor 214 overlying the navigational map GUI display 212 at the determined pixel coordinate location. In this regard, as the pilot or other user manipulates the user input device 208, the pixel coordinate location of the graphical representation of the active cursor 214 may dynamically update to move with respect to the underlying geographic region depicted on the navigational map GUI display 212 such that the current, real-time location of the active cursor 214 is responsive to the movement or interaction with the user input device 208. The cursor mapping service 202 receives or otherwise obtains, from the avionics application 204, data or other information identifying the current pixel coordinate location associated with the active cursor 214 overlying the navigational map GUI display 212.

The cursor mapping process 300 continues by identifying the geographic region that is concurrently depicted on an inactive GUI display and mapping or otherwise converting the active cursor pixel location to a corresponding virtual cursor pixel location with respect to the geographic region depicted on the inactive GUI display (tasks 306, 308). In this regard, in one or more embodiments, the cursor mapping service 202 converts the active cursor pixel location to a corresponding virtual cursor pixel location that overlies, overlaps or otherwise corresponds to the same geographic location that the active cursor 214 overlies on the active GUI display 212. After mapping the active cursor pixel location to a corresponding virtual cursor pixel location that corresponds to the same geographic location as the active cursor pixel location with respect to the active GUI display, the cursor mapping process 300 generates, renders or otherwise provides a graphical representation of a virtual cursor at the virtual cursor pixel location on the inactive GUI display (task 310). In one or more embodiments, the cursor mapping service 202 renders, generates or otherwise provides a graphical representation of a cursor GUI element 224 overlying the inactive navigational map GUI display 222 on the display device 220 at the virtual cursor pixel location on the inactive navigational map GUI display 222 such that the cursor GUI element 224 overlies a geographic location on the inactive navigational map GUI display 222 that corresponds to the geographic location on the active navigational map GUI display 212 where the active cursor GUI element 214 is located. In other embodiments, the cursor mapping service 202 provides commands, signals or other instructions to the inactive avionics application 206 that cause the inactive avionics application 206 to render a graphical representation of a virtual cursor GUI element 224 on the inactive navigational map GUI display 222. In exemplary embodiments, the virtual cursor 224 is rendered using a visually distinguishable graphical characteristic (e.g., a visually distinguishable color, shading, border, highlighting, transparency and/or the like) that is different from a corresponding graphical characteristic associated with the active cursor 214. For example, the virtual cursor 224 may be rendered using a GUI element having the same size and/or shape as the active cursor 214 but in a different color (e.g., cyan) that indicates the virtual cursor 224 and the GUI display 222 are not active while the active cursor 214 is rendered in a different color (e.g., white) that indicates the GUI display 212 is the active GUI display 212.

In one or more embodiments, the cursor mapping service 202 receives or otherwise obtains, from the inactive avionics application 206, data or other information identifying a reference geographic coordinate location corresponding to the geometric center (or another reference point) of the inactive navigational map GUI display 222 generated by the inactive avionics application 206, a reference pixel coordinate location on the display device 220 corresponding to the geometric center (or another reference point) of the inactive navigational map GUI display 222, the range, scale, zoom or other indicia of the geographic region depicted on the inactive navigational map GUI display 222 and/or indicia of the display area (or range of pixel coordinate locations) occupied by the geographic region depicted on the inactive navigational map GUI display 222. Based on the relationship between the range, scale, zoom or other indicia of the geographic region depicted on the inactive navigational map GUI display 222 and the corresponding display area (or range of pixel coordinate locations) occupied by the geographic region depicted on the inactive navigational map GUI display 222, the cursor mapping service 202 may calculate or otherwise determine a ratio for mapping a real-world geographic distance between geographic coordinate locations to a corresponding distance between pixel coordinate locations. The cursor mapping service 202 may then calculate or otherwise determine the relative geographic distance (or relative geographic distance vector) between the active cursor geographic coordinate location and the reference geographic coordinate location associated with the inactive navigational map GUI display 222 and convert the relative geographic distance to a corresponding distance (or vector) in the pixel coordinate domain based on the ratio or scale of the inactive navigational map GUI display 222 relating the distance between pixel coordinate locations to the real-world geographic distance between geographic coordinate locations depicted on the inactive navigational map GUI display 222. The cursor mapping service 202 may then add the relative pixel coordinate distance (or vector) to the reference pixel coordinate location associated with the geometric center or other reference point on the inactive navigational map GUI display 222 to arrive at a virtual pixel coordinate location on the inactive navigational map GUI display 222 that corresponds to the active cursor pixel coordinate location on the active navigational map GUI display 212, by virtue of the virtual pixel coordinate location overlying or otherwise corresponding to the same geographic location as the active cursor pixel coordinate location.

In other embodiments, rather than directly mapping the geographic location associated with the active cursor to the same geographic location on the inactive GUI display, the cursor mapping process 300 may perform a fuzzy mapping (e.g., at task 304) to map the active cursor location to the same GUI element, graphic or other feature depicted on the inactive GUI display that corresponds to the GUI element, graphic or other feature depicted on the active map GUI display that is indicated by the active cursor or otherwise in a vicinity of the active cursor 214 on the active GUI display. For example, the cursor mapping service 202 may identify or otherwise determine a waypoint, navigational reference point, or other GUI element or graphic depicted on the active navigational map GUI display 212 at a pixel coordinate location on the display device 210 that is closest to the pixel coordinate location of the active cursor 214 on the display device 210 as the geographic location to be associated with the displayed location of the active cursor 214. The cursor mapping service 202 then identifies or otherwise determines the pixel coordinate location on the inactive navigational map GUI display 222 that is associated with that identified waypoint, navigational reference point, or other GUI element or graphic indicated by the active cursor 214, and then renders or otherwise provides the graphical representation of the virtual cursor 224 at that pixel coordinate location on the inactive navigational map GUI display 222. In this manner, the virtual cursor 224 may be utilized to highlight a waypoint, navigational reference point or other point of interest on the inactive navigational map GUI display 222 without requiring the pilot or other user to precisely manipulate the active cursor 214 to perfectly overlie or otherwise align with that waypoint, navigational reference point or other point of interest on the active navigational map GUI display 212 by allowing the pilot to bring the active cursor 214 within at least a threshold distance (in the on-screen or pixel coordinate domain) of that waypoint, navigational reference point or other point of interest.

Still referring to FIG. 3, in exemplary embodiments, the cursor mapping process 300 repeats indefinitely while the pilot or other user is interacting with the active avionics application 204 to manipulate the displayed location of the active cursor 214 with respect to the active navigational map GUI display 212 via the user input device 208, such that the displayed location of the virtual cursor 224 on the inactive navigational map GUI display 222 dynamically updates in response to changes to the displayed location of the active cursor 214 to maintain correspondence between the cursors 214, 224 and the geographic location associated with the underlying content depicted on the respective GUI displays 212, 222. By concurrently presenting the cursors 214, 224 on the different GUI displays 212, 222 while synchronizing the displayed locations of the cursors 214, 224 on the different GUI displays 212, 222, a pilot or other user may quickly correlate between geographic locations depicted on the different GUI displays 212, 222 by using the cursors 214, 224 as a reference when shifting visual focus from the active GUI display 212 to the inactive GUI display 222, and/or vice versa.

In one or more implementations, the cursor mapping process 300 and/or the cursor mapping service 202 may be configured to synchronize selection of a GUI element or other feature depicted on the active GUI display 212 by the active cursor 214 with the corresponding GUI element or feature on the inactive GUI display 222. For example, when the pilot or other user manipulates the user input device 208 to adjust the position of the active cursor 214 to overlie a waypoint, navigational reference point or other GUI element on the active navigational map GUI display 212 and then manipulates the user input device 208 to select or otherwise activate that waypoint, navigational reference point or GUI element, the cursor mapping service 202 may provide a corresponding commands, signals or other instructions to the inactive avionics application 206 that cause the inactive avionics application 206 to dynamically update the inactive navigational map GUI display 222 to reflect selection of that waypoint, navigational reference point or GUI element on the inactive navigational map GUI display 222. In this manner, both the spatial location and behavior of the virtual cursor 224 on the inactive navigational map GUI display 222 may concurrently mirror or otherwise reflect the spatial location and behavior of the active cursor 214 on the active navigational map GUI display 212, even though the avionics application 206 and/or the GUI display 222 are inactive or otherwise not being directly interacted with via the user input device 208. That said, in other embodiments, user selections using the active cursor 214 may be limited or otherwise confined to the active GUI display 212, such that selection of a waypoint, navigational reference point or GUI element does not influence the inactive GUI display 222 or otherwise trigger a response by the inactive avionics application 206 and/or the inactive GUI display 222 (e.g., by the cursor mapping service 202 ignoring user selections and/or failing to provide indicia of user selections to the inactive avionics application 206).

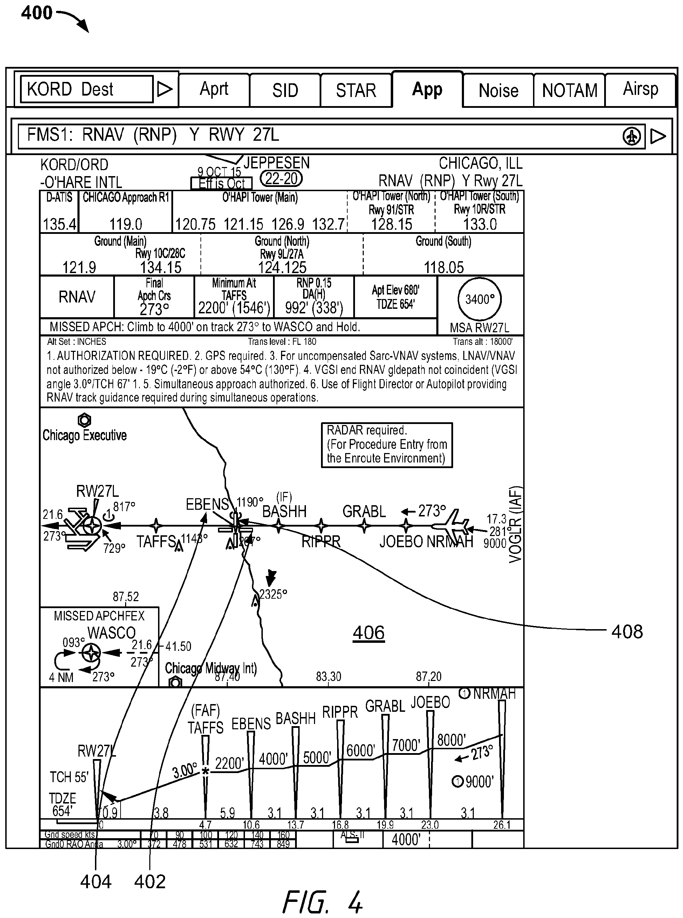

FIGS. 4-5 depict an exemplary active navigational map GUI display 400 and inactive navigational map GUI display 500 suitable for presentation on one or more display devices 104, 210, 220 onboard an aircraft 102 in connection with the cursor mapping process 300 of FIG. 3. FIGS. 4-5 depict a scenario where the active GUI display 212 is realized as a procedure chart navigational map GUI display 400 that includes a graphical representation of an aircraft procedure 404 within a displayed geographic region 406 that is based on procedure information for that procedure maintained in a procedure database 124, and the inactive GUI display 222 is realized as an INAV lateral navigational map GUI display 500 that includes a graphical representation of a flight plan 504 maintained by an FMS 116 or other avionics system. In this regard, a pilot or other user manipulating the user input device 106, 208 causes the user input device 106, 208 to provide corresponding signals, to the active procedure chart display application 204, that are indicative of the relative position, direction and/or rate of movement to be associated with a graphical representation of an active cursor 402 (e.g., active cursor 214) provided on the procedure chart navigational map GUI display 212, 400 overlying the background geographic region 406 associated with the selected aircraft procedure (e.g., an RNAV approach procedure for runway 27L), such that the pixel coordinate location of the active cursor 214, 402 corresponds to user interaction with the user input device 106, 208. Accordingly, FIG. 4 depicts a scenario where the user has manipulated the user input device 106, 208 to cause the active cursor 214, 402 to be positioned near the graphical representation of a waypoint 408 (e.g., the EBENS waypoint) associated with the depicted aircraft procedure.

Referring to FIG. 4 with continued reference to FIGS. 1-3, when the cursor mapping process 300 is active or otherwise enabled, the cursor mapping service 202 receives or otherwise obtains, from the procedure chart display application 204, data or other information identifying the current pixel coordinate location associated with the active cursor 214, 402, the current range of pixel coordinates associated with the depicted geographic region 406, the range or scale associated with the depicted geographic region 406, and the relationship between the geographic coordinate location associated with the geometric center or another reference point for the depicted geographic region 406 and the corresponding pixel coordinate location of that reference point for the depicted geographic region 406 (e.g., tasks 302, 304). Based on the relationship between the current pixel coordinate location associated with the active cursor 214, 402 and the reference pixel coordinate location associated with the reference point for the depicted geographic region 406, the cursor mapping service 202 determines a corresponding geographic coordinate location within the geographic region 406 underlying the active cursor 214, 402 to be associated with the active cursor 214, 402 using the geographic coordinate location associated with the reference point for the depicted geographic region 406 and the scale or range associated with the depicted geographic region 406 to map the active cursor 214, 402 to a particular geographic coordinate location in the vicinity of the depicted waypoint 408 (e.g., task 308).

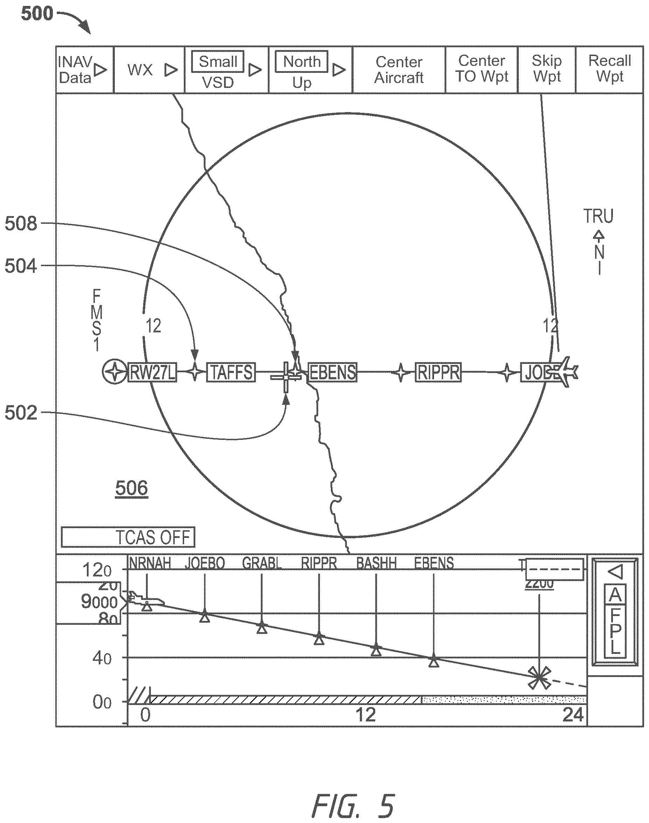

Referring to FIG. 5, with continued reference to FIGS. 1-4, when the cursor mapping process 300 is active or otherwise enabled, the cursor mapping service 202 receives or otherwise obtains, from the inactive INAV display application 206, data or other information identifying the current range of pixel coordinates associated with the depicted geographic region 506 on the INAV lateral navigational map GUI display 222, 500, the range or scale associated with the depicted geographic region 506, and the relationship between the geographic coordinate location associated with the geometric center or another reference point for the depicted geographic region 506 and the corresponding pixel coordinate location of that reference point for the depicted geographic region 506 (e.g., task 306). Based on the relationship between the current geographic coordinate location associated with the active cursor 214, 402 and the reference geographic coordinate location associated with the reference point for the depicted geographic region 506, the cursor mapping service 202 determines a corresponding pixel coordinate location within the geographic region 506 to be associated with the active cursor 224, 502 using the geographic coordinate location associated with the reference point for the depicted geographic region 506 and the scale or range associated with the depicted geographic region 506 to map the geographic coordinate location of the active cursor 214, 402 to a particular pixel coordinate location with respect to the range of pixel coordinate locations encompassing the depicted geographic region 506 (e.g., task 308). After mapping the estimated geographic coordinate location of the active cursor 214, 402 to a corresponding pixel coordinate location on the INAV lateral navigational map GUI display 222, 500, the cursor mapping service 202 renders (or causes the INAV display application 206 to render) a graphical representation of a virtual cursor 502 (e.g., virtual cursor 224) overlying the depicted geographic region 506 on the INAV lateral navigational map GUI display 222, 500 (e.g., task 310).

As a result of the cursor mapping process 300, the virtual cursor 224, 502 is concurrently depicted on the INAV lateral navigational map GUI display 222, 500 in the vicinity of the graphical representation of the same nearby procedure waypoint 508 that is depicted on the INAV lateral navigational map GUI display 222, 500 in a manner that mirrors, corresponds to, or otherwise reflects the spatial relationship between the active cursor 214, 402 and the depicted procedure waypoint 408 on the procedure chart navigational map GUI display 212, 400. In this manner, a pilot reviewing a desired or planned aircraft procedure to be executed on the procedure chart navigational map GUI display 400 may utilize the cursor mapping process 300 and the virtual cursor 224, 502 to concurrently review and cross-reference the INAV lateral navigational map GUI display 500 with the procedure chart navigational map GUI display 400 to verify or otherwise confirm the waypoints depicted as part of the graphical representation of the flight plan 504 match or otherwise correspond to the waypoints associated with the aircraft procedure shown in the graphical representation of the aircraft procedure 404 by using the cursors 402, 502 to quickly visually and mentally correlate the different navigational map GUI displays 400, 500 with one another. Thus, if there is a mismatch between the procedure information maintained in the procedure database 124 and the currently configured flight plan maintained by the FMS 116 (e.g., due to the procedure database 124 being updated or upgraded more recently than the flight planning data utilized by the FMS 116, or vice versa), the pilot or other crew member may utilize the cursors 402, 502 to quickly identify the discrepancy and initiate remedial action.

Still referring to FIGS. 1-5, in scenarios where the cursor mapping process 300 and/or the cursor mapping service 202 is configured to provide a fuzzy mapping rather than determining or estimating a geographic coordinate location of the active cursor 214, 402, the cursor mapping service 202 may identify the EBENS waypoint 408 as the geographic reference point to be associated with the active cursor 214, 402 based on the pixel coordinate location of the EBENS waypoint 408 being within a threshold distance of the pixel coordinate location of the active cursor 214, 402 or otherwise being the particular waypoint or GUI element of the displayed aircraft procedure 404 that is closest to the pixel coordinate location of the active cursor 214, 402. Thereafter, the cursor mapping service 202 may interact with the INAV display application 206 to identify the corresponding pixel coordinate location where the EBENS waypoint 508 is depicted on the INAV lateral navigational map GUI display 500, and then render or otherwise provide the graphical representation of the virtual cursor 224, 502 at that pixel coordinate location on the inactive procedure chart navigational map GUI display 222, 500. In this manner, the virtual cursor 224 may be utilized to highlight the depiction of the EBENS waypoint 508 on the inactive INAV lateral navigational map GUI display 222, 500 without requiring the pilot or other user to precisely manipulate the active cursor 214 to perfectly overlie or otherwise align with the depicted EBENS waypoint 408 on the procedure chart navigational map GUI display 400.

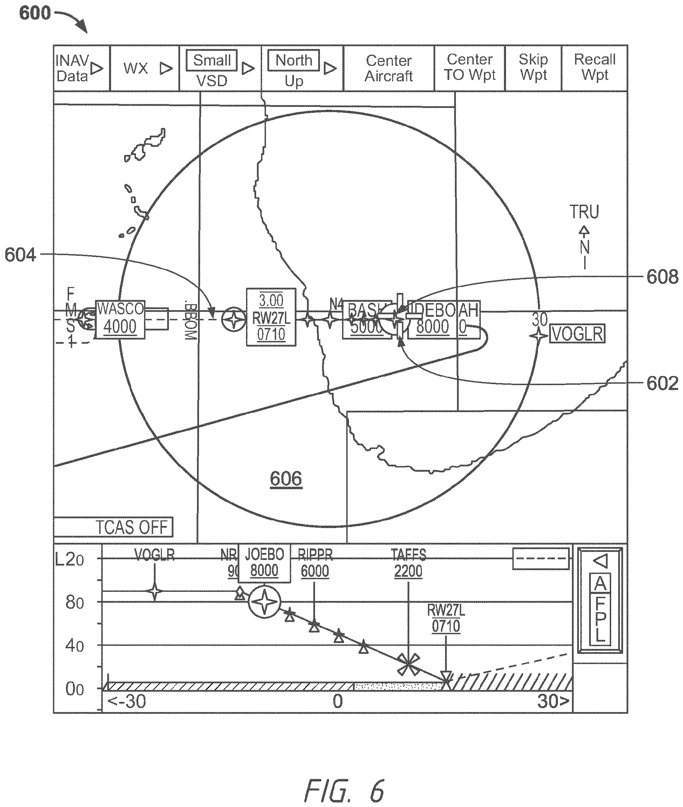

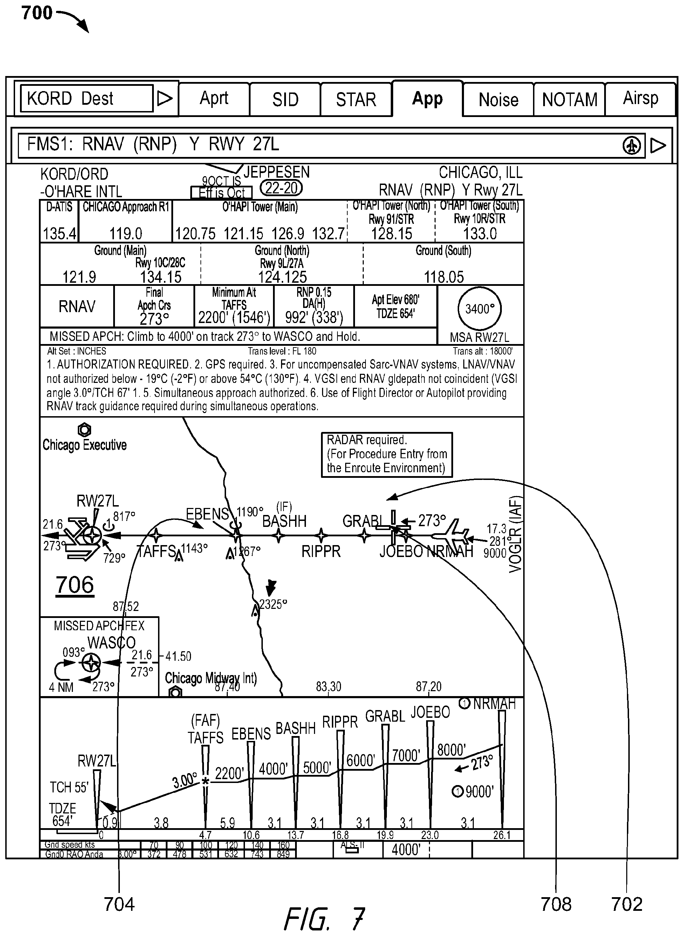

FIGS. 6-7 depict an alternative scenario where the active GUI display 212 is realized as an INAV lateral navigational map GUI display 600 that includes a graphical representation of a flight plan 604 and the inactive GUI display 222 is realized as a procedure chart navigational map GUI display 700 that includes a graphical representation of an aircraft procedure 704. In this scenario, a pilot or other user manipulating the user input device 106, 208 causes the user input device 106, 208 to provide corresponding signals, to the active INAV display application 204, such that the pixel coordinate location of the active cursor 602 on the INAV lateral navigational map GUI display 600 corresponds to user interaction with the user input device 106, 208. Accordingly, FIG. 6 depicts a scenario where the user has manipulated the user input device 106, 208 to cause the active cursor 214, 602 to be positioned near and/or hover over the graphical representation of a waypoint 608 (e.g., the JOEBO waypoint) of the depicted flight plan 604 on the INAV lateral navigational map GUI display 600.

When the cursor mapping process 300 is active or otherwise enabled, the cursor mapping service 202 maps the pixel coordinate location of the active cursor 214, 602 on the INAV lateral navigational map GUI display 600 to a corresponding geographic coordinate location based on the relationship between the pixel coordinate location of the active cursor 214, 602 and a reference pixel coordinate location associated with a reference point for the depicted geographic region 606 on the INAV lateral navigational map GUI display 600 using the geographic coordinate location associated with the reference point for the depicted geographic region 606 and the scale or range associated with the depicted geographic region 606. The cursor mapping service 202 then maps the geographic coordinate location to a corresponding pixel coordinate location on the procedure chart navigational map GUI display 700 based on the relationship between the current geographic coordinate location associated with the active cursor 214, 602 and a reference geographic coordinate location associated with a reference point for the depicted geographic region 706 on the procedure chart navigational map GUI display 700 using the scale or range associated with the depicted geographic region 706 to map the active cursor geographic coordinate location to a particular virtual cursor pixel coordinate location with respect to the range of pixel coordinate locations encompassing the depicted geographic region 706 (e.g., task 308).

After mapping the estimated active cursor geographic coordinate location to a corresponding pixel coordinate location on the procedure chart navigational map GUI display 222, 700, the cursor mapping service 202 renders (or causes the procedure chart display application 206 to render) a graphical representation of a virtual cursor 702 (e.g., virtual cursor 224) overlying the depicted geographic region 706 near the same depicted waypoint 708 on the procedure chart navigational map GUI display 222, 700 (e.g., task 310). As described above, the pixel coordinate location of the concurrently depicted virtual cursor 224, 702 dynamically updates to move in sync with the active cursor 214, 602 in response to user interaction with the user input device 106, 208 to maintain the same correspondence between the virtual cursor 224, 702 and the underlying geographic region 706 as depicted on the INAV lateral navigational map GUI display 600 between the active cursor 214, 602 and the underlying geographic region 606. In this manner, a pilot reviewing the displayed flight plan 604 on the INAV lateral navigational map GUI display 600 may utilize the cursor mapping process 300 and the virtual cursor 224, 702 to concurrently review and cross-reference the INAV lateral navigational map GUI display 600 with the procedure chart navigational map GUI display 700 to verify or otherwise confirm the waypoints depicted as part of the graphical representation of the flight plan 604 match or otherwise correspond to the waypoints associated with the displayed aircraft procedure 704 by using the cursors 602, 702 to quickly visually and mentally correlate the different navigational map GUI displays 600, 700 with one another, thereby allowing the pilot to identify and respond to any discrepancies between the flight plan and the planned procedure.

By virtue of the subject matter described herein, a pilot, co-pilot, or other crew member operating the aircraft 102 may quickly establish mental correlation between different GUI displays generated by different avionics systems and/or based on different underlying data to verify the information, data or other content depicted on the different GUI displays conform with one another. This reduces head-down time associated with verifying the accuracy and conformity of the flight plan with the desired aircraft procedure, or vice versa, thereby helping the pilot maintain situational awareness with respect to operating the aircraft while also enabling the pilot to quickly identify and respond to any discrepancies, thereby improving safety, reliability and/or efficiency of operation.

For the sake of brevity, conventional techniques related to GUI displays, flight planning, graphics and image processing, avionics systems, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

The subject matter may be described herein in terms of functional and/or logical block components, and with reference to symbolic representations of operations, processing tasks, and functions that may be performed by various computing components or devices. It should be appreciated that the various block components shown in the figures may be realized by any number of hardware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices. Furthermore, embodiments of the subject matter described herein can be stored on, encoded on, or otherwise embodied by any suitable non-transitory computer-readable medium as computer-executable instructions or data stored thereon that, when executed (e.g., by a processing system), facilitate the processes described above.

The foregoing description refers to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically. Thus, although the drawings may depict one exemplary arrangement of elements directly connected to one another, additional intervening elements, devices, features, or components may be present in an embodiment of the depicted subject matter. In addition, certain terminology may also be used herein for the purpose of reference only, and thus are not intended to be limiting.

The foregoing detailed description is merely exemplary in nature and is not intended to limit the subject matter of the application and uses thereof. Furthermore, there is no intention to be bound by any theory presented in the preceding background, brief summary, or the detailed description.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the subject matter in any way. Rather, the foregoing detailed description will provide those skilled in the art with a convenient road map for implementing an exemplary embodiment of the subject matter. It should be understood that various changes may be made in the function and arrangement of elements described in an exemplary embodiment without departing from the scope of the subject matter as set forth in the appended claims. Accordingly, details of the exemplary embodiments or other limitations described above should not be read into the claims absent a clear intention to the contrary.

## Claims

1. A method of assisting operation of a vehicle, the method comprising:
identifying a first location of a cursor overlying a first navigational map;
determining a geographic reference point on the first navigational map corresponding to the first location;
determining a second location on a second navigational map corresponding to the geographic reference point on the first navigational map; and
concurrently displaying a virtual cursor at the second location overlying the second navigational map.

2. The method of claim 1, wherein:
determining the geographic reference point comprises determining a geographic coordinate location depicted on the first navigational map underlying a pixel coordinate location of the cursor; and
determining the second location comprises identifying a second pixel coordinate location where the geographic coordinate location is displayed on the second navigational map.

3. The method of claim 2, wherein:
the vehicle comprises an aircraft;
the first navigational map comprises a lateral map graphical user interface (GUI) display including a graphical representation of at least a portion of a flight plan for the aircraft; and
the second navigational map comprises a procedure chart GUI display including a graphical representation of an aircraft procedure.

4. The method of claim 2, wherein:
the vehicle comprises an aircraft;
the first navigational map comprises a procedure chart graphical user interface (GUI) display including a graphical representation of an aircraft procedure; and
the second navigational map comprises a lateral map GUI display including a graphical representation of at least a portion of a flight plan for the aircraft.

5. The method of claim 1, wherein:
determining the geographic reference point comprises identifying a navigational reference point nearest to a pixel coordinate location of the cursor; and
determining the second location comprises identifying a second pixel coordinate location where the navigational reference point is displayed on the second navigational map.

6. The method of claim 5, wherein:
the vehicle comprises an aircraft;
the navigational reference point comprises a waypoint associated with a flight plan for the aircraft;
the first navigational map comprises a lateral map including a graphical representation of at least a portion of the flight plan; and
the second navigational map comprises a procedure chart.

7. The method of claim 5, wherein:
the vehicle comprises an aircraft;
the navigational reference point comprises a waypoint associated with an aircraft procedure;
the first navigational map comprises a procedure chart including a graphical representation of the aircraft procedure; and
the second navigational map comprises a lateral map.

8. The method of claim 1, further comprising dynamically updating the second location of the virtual cursor overlying the second navigational map in response to a change to a pixel coordinate location of the cursor overlying the first navigational map.

9. The method of claim 1, wherein the first navigational map and the second navigational map are concurrently displayed on a common display device.

10. The method of claim 1, wherein the first navigational map is displayed on a first display device and the second navigational map is displayed on a second display device different from the first display device.

11. The method of claim 1, wherein concurrently displaying the virtual cursor comprises rendering a graphical representation of the virtual cursor on the second navigational map at the second location using a visually distinguishable graphical characteristic that is different from the cursor on the first navigational map.

12. The method of claim 1, further comprising synchronizing movement of the virtual cursor on the second navigational map with movement of the cursor on the first navigational map while concurrently displaying the virtual cursor on the second navigational map while the cursor is depicted on the first navigational map.

13. A computer-readable medium having computer-executable instructions stored thereon that, when executed by a processing system, cause the processing system to:
identify a first location of an active cursor overlying a first graphical user interface (GUI) display;
determine a geographic reference point on the first GUI display corresponding to the first location;
determine a second location on a second GUI display corresponding to the geographic reference point on the first GUI display, wherein the second GUI display is different from the first GUI display; and
concurrently display a virtual cursor at the second location overlying the second GUI display while the active cursor overlying the first GUI display is depicted at the first location.

14. The computer-readable medium of claim 13, wherein:
the geographic reference point comprises a geographic coordinate location depicted on the first GUI display underlying a pixel coordinate location of the active cursor; and
the second location comprises a second pixel coordinate location where the geographic coordinate location is displayed on the second GUI display.

15. A system comprising:
a user input device to receive user input;
a first application to provide a first navigational map graphical user interface (GUI) display including a graphical representation of an active cursor associated with the user input;
a second application to provide a second navigational map GUI display; and
a cursor mapping service coupled to the first application and the second application to identify a pixel coordinate location of the active cursor on the first navigational map GUI display, determine a geographic reference point on the first navigational map GUI display corresponding to the pixel coordinate location, determine a second pixel coordinate location on the second navigational map GUI display corresponding to the geographic reference point on the first navigational map GUI display, and concurrently display a virtual cursor at the second pixel coordinate location on the second navigational map GUI display.
